(19) Europäisches Patentamt

European Patent Office

Office européen des brevets

(11) EP 2 530 487 B1

(12) EUROPEAN PATENT SPECIFICATION

(45) Date of publication and mention of the grant of the patent:
**01.10.2014 Bulletin 2014/40**

(21) Application number: **11168398.3**

(22) Date of filing: **01.06.2011**

(51) Int Cl.:
**G01S 19/09** *(2010.01)*     **G01S 19/27** *(2010.01)*
**G01S 5/00** *(2006.01)*

(54) **Satellite positioning with assisted calculation**

Satellitenpositionierung mit gestützter Berechnung

Positionnement de satellite avec calcul assisté

(84) Designated Contracting States:
**AL AT BE BG CY CZ DE DK EE ES FI FR GR HR HU IS IT LT LU LV MC MK MT NL NO PL PT RO RS SE SI SK SM TR**

(43) Date of publication of application:
**05.12.2012 Bulletin 2012/49**

(73) Proprietor: **u-blox A.G.**
**8800 Thalwil (CH)**

(72) Inventors:
• **Yule, Andrew**
**Reigate, Surrey RH2 9QQ (GB)**
• **Simmons, Ian**
**Reigate, Surrey RH2 9QQ (GB)**
• **Houldsworth, Richard**
**Reigate, Surrey RH2 9QQ (GB)**

(74) Representative: **O'Callaghan, Robert James et al**
**Elkington and Fife LLP**
**Prospect House**
**8 Pembroke Road**
**Sevenoaks, Kent TN13 1XR (GB)**

(56) References cited:
**EP-A2- 1 260 830     WO-A2-2007/082214**
**GB-A- 2 463 481**

**Description**

This invention relates to a receiver for a Global Navigation Satellite System (GNSS) and to methods of processing satellite signals that have been received by such a receiver. It is particularly relevant to the Global Positioning System (GPS).

GPS is a satellite-based navigation system consisting of a network of up to 32 orbiting satellites (called space vehicles, "SV") that are in six different orbital planes. 24 satellites are required by the system design, but more satellites provide improved coverage. The satellites are constantly moving, making two complete orbits around the Earth in just less than 24 hours.

The GPS signals transmitted by the satellites are of a form commonly known as Direct Sequence Spread Spectrum employing a pseudo-random code which is repeated continuously in a regular manner. The satellites broadcast several signals with different spreading codes including the Coarse / Acquisition or C/A code, which is freely available to the public, and the restricted Precise code, or P-code, usually reserved for military applications. The C/A code is a 1,023 bit long pseudo-random code broadcast with a chipping rate of 1.023 MHz, repeating every millisecond. Each satellite sends a distinct C/A code, which allows it to be uniquely identified.

A data message is modulated on top of the C/A code by each satellite and contains important information such as detailed orbital parameters of the transmitting satellite (called ephemeris), information on errors in the satellite's clock, status of the satellite (healthy or unhealthy), current date, and time. This information is essential to a GPS receiver for determining an accurate position. Each satellite only transmits ephemeris and detailed clock correction parameters for itself and therefore an unaided GPS receiver must process the appropriate parts of the data message of each satellite it wants to use in a position calculation.

The data message also contains the so called almanac, which comprises less accurate information about all the other satellites and is updated less frequently. The almanac data allows a GPS receiver to estimate where each GPS satellite should be at any time throughout the day so that the receiver can choose which satellites to search for more efficiently. Each satellite transmits almanac data showing the orbital information for every satellite in the system.

A conventional, real-time GPS receiver reads the transmitted data message and saves the ephemeris, almanac and other data for continual use.

To determine position, a GPS receiver compares the time a signal was transmitted by a satellite with the time it was received by the GPS receiver. The time difference tells the GPS receiver how far away that particular satellite is. The ephemeris for that satellite enables the GPS receiver to accurately determine the position of the satellite. By combining distance measurements from multiple satellites with the knowledge of their positions, position can be obtained by trilateration. With a minimum of three satellites, a GPS receiver can determine a latitude/longitude position (a 2D position fix). With four or more satellites, a GPS receiver can determine a 3D position which includes latitude, longitude, and altitude. The information received from the satellites can also be used to set (or correct) the real-time clock (RTC) within the GPS receiver.

By processing the apparent Doppler shifts of the signals from the satellites, a GPS receiver can also accurately provide speed and direction of travel (referred to as 'ground speed' and 'ground track', respectively).

A complete data signal from the satellites consists of a 37,500 bit Navigation Message, which takes 12.5 minutes to send at 50 bps. The data signal is divided into 25 30s frames, each having 1500 bits and these are divided into five 6s subframes. Each 6s subframe is divided into ten 30 bit words. All the information necessary for a position fix (ephemeris etc) is contained within each frame and so a GPS receiver will typically take around 30s to produce a position fix from a so-called cold start. This is often called "time to first fix" (TTFF).

The first subframe gives clock correction data, the second and third subframes give ephemeris data and the almanac data is in the fourth and fifth subframes.

The SVs all broadcast on the same frequency. In order to distinguish a signal from a particular satellite, the receiver needs to generate a replica of the C/A code known to be in use by that satellite and align it so that it is synchronised with the incoming signal which will be delayed by an unknown amount predominantly due to the time of flight of the signal in travelling from the satellite to the receiver (typically around 0.07s). In general, it is not possible for a receiver to accurately predict the alignment necessary to get the replica in sync with the incoming signal, so some form of search is required, with a number of alignments being tried in turn and the best match being selected. This process of evaluating a number of candidate alignments is normally termed correlation as the receiver implements a correlation function between the received signal and the known C/A code for each satellite in turn, to determine if the received signal includes a component having the C/A code from a particular SV. The correlation function has to be calculated for multiple relative timings, and when the correlation peak is found, this corresponds to a particular timing and a particular SV. The discovered timing in turn corresponds to a particular distance from the SV.

The search for each satellite C/A code is complicated by the fact that the apparent frequency of the satellite signal observed by the receiver will vary. The principal sources of variation are the Doppler-effect due to the movement of the satellite; Doppler-effect due to movement of the receiver; and the drift and offset of the local oscillator (LO) unit within the receiver's frequency synthesizer. This means that an exhaustive search for the C/A code requires the evaluation of the correlation function at a range of phase (temporal) shifts for each of a range of frequency shifts.

The correlation process is sometimes referred to as "despreading", since it removes the spreading code from the signal. The determined code-phase - that is, the timing of the peak of the correlation function - reveals the accurate timing information for use in the distance calculation. However, as the code is repeated every millisecond, the coarse timing also needs to be determined. Typically, less frequently repeating data components are used for the more coarse timing evaluation (i.e. to enable GPS time to be derived), such as the individual bits of the 50bps data message and specific parts of it such as the subframe preamble or subframe handover word.

Together, the code-phase and coarse timing information comprise a "pseudo-range", because they identify the time-of-flight of the message from the satellite. This time-of-flight is related to the distance travelled by c, the speed of light. This is a "pseudo"-range or relative range (rather than a true range) because the relative offset between the satellite's clock and the receiver's RTC is unknown. However, this offset is the same relative to all satellites (since their clocks are synchronized); so, pseudo-ranges for a set of diverse satellites provide sufficient information for the trilateration calculation to determine a unique position fix.

The majority of GPS receivers work by processing signals from the satellites in "real time", as they are received, reporting the position of the device at the current time. Such "conventional" GPS receivers invariably comprise:

- an antenna suitable for receiving the GPS signals,
- analogue RF circuitry (often called a GPS front end) designed to amplify, filter, and mix down to an intermediate frequency (IF) the desired signals so they can be passed through an appropriate analogue-to-digital (A/D) converter at a sample rate normally of the order of a few MHz,
- digital signal processing (DSP) hardware that carries out the correlation process on the IF data samples generated by the A/D converter, normally combined with some form of micro controller that carries out the "higher level" processing necessary to control the signal processing hardware and calculate the desired position fixes.

The less well known concept of "Store and Process Later" (also known, and hereinafter referred to, as "Capture-and-Process") has also been investigated. This involves storing the IF data samples collected by a conventional antenna and analogue RF circuitry in some form of memory before processing them at some later time (seconds, minutes, hours or even days) and often at some other location, where processing resources are greater and/or the receiver is not powered by a battery.

This means that a Capture-and-Process receiver is considerably simpler than a real-time receiver. Only short segments of samples need to be stored - for example, 100-200ms worth of data. There is no longer any need to decode the (very slow) data message from each SV; no need to perform correlation and determine pseudo-ranges; and no need to execute the trilateration calculation to derive a position fix. Accordingly, much of the digital signal processing hardware of the conventional receiver can be eliminated, reducing complexity and cost. Power consumption is also significantly reduced, leading to longer battery life.

Other Capture-and-Process receivers have also been proposed which include the DSP hardware necessary for calculating position fixes. In one mode, such a device receives, samples and stores GPS signals in a memory, but does not process them. When switched to a separate mode, the device ceases receiving signals and instead starts processing those samples which were stored previously. A device of this kind is suitable for generating a retrospective track-log, or history of movements, for example after the user has returned from a trip.

EP 1260830 discloses a dual mode GPS receiving system comprising a conventional GPS receiver and a snapshot GPS receiver. In a first mode, the conventional GPS receiver extracts satellite information from first GPS signals and stores it in a memory. In a second mode, the snapshot GPS receiver uses said satellite information and second GPS signals to calculate a position.

GB 2463481 discloses a way of estimating the position of a first event by interpolating between the position estimates of second and third events.

According to a first aspect of the present invention, there is provided a method of calculating a position fix from satellite signal samples, the method comprising:

obtaining first reference information produced during the calculation of a first position fix, the first position fix being the calculated position of a satellite-positioning receiver at a first time;
obtaining second reference information produced during the calculation of a second position fix, the second position fix being the calculated position of the receiver at a second time;
receiving a set of satellite signal samples generated by the receiver at a third time between the first and second times, or ranging measurements derived from such a set of satellite signal samples; and
processing the set of samples or the ranging measurements to calculate a third position fix,
wherein said processing is assisted by the reference information produced during the calculation of the first and second position fixes.

In this way, the calculation of the third position fix may be made simpler, faster, less energy-intensive, or more efficient in other ways. The first and second reference information derived from the calculation of the first and second position fixes, respectively, can be combined in order to intelligently support the calculation of the third position fix. For example, computational effort may be reduced by minimising duplication of effort across position fixes.

The present inventors have recognised that two or more pieces of reference information are extremely advantageous in many circumstances, compared with prediction from a single piece of reference information. For example, more accurate predictions are possible, because reference information for two points in time enables trends in the information to be taken into consideration. Search-ranges for unknown parameters can also potentially be constrained by knowledge of such trends. Thus, if two pieces of reference information are exploited, much greater efficiency savings may be possible in the calculation of the third position fix.

The first and second reference information is a product of the calculation of the first and second position fix, respectively. For example, it may be the position fix itself; an intermediate result, such as a ranging measurement; or information that is produced as a side-effect such as a clock error (that is, a difference between the receiver's clock and a satellite clock). Preferably, the reference information comprises information which is usable in the calculation of the third position fix to reduce the complexity or quantity of the calculations. The reference information may be used to bootstrap parameters in the calculation of the third position fix, for example. Preferably, the reference information comprises values that can be projected forward or backward in time, in order to predict corresponding values suitable for calculating the third position fix.

In some embodiments, neither samples nor ranging measurements (such as code-phases or pseudo-ranges) are stored in the memory. That is, the samples are processed immediately, to calculate a position fix, without being stored in the memory. This provides a real-time satellite positioning receiver.

In other embodiments, samples or ranging measurements are stored in the memory for an intentional delay, for later processing. This delayed processing may be performed by the satellite positioning receiver which generated the samples or by some other, external device to which the data is transferred. This approach is referred to herein as "Capture-and-Process" satellite positioning. Some embodiments may use a mixture of both the "Capture-and-Process" approach and real-time positioning.

A ranging measurement may comprise, for example, a code-phase, carrier-phase, or pseudo-range measurement. In general a ranging measurement is a value which (implicitly or explicitly) provides some information about a distance from the satellite positioning receiver to one satellite among the constellation of positioning-satellites. A ranging measurement may be a represented by a distance or by a time-of-flight or time-of-arrival of a signal. Many types of ranging measurements are not absolute or unique measurements - they typically incorporate some degree of relativity or ambiguity. For example a code-phase measurement, by itself, specifies the (relative) time-of-arrival within the period of one complete repetition of the spreading code - known in the art as a "code epoch". There remains an ambiguity about which code epoch of the satellite data message is being observed. The term "ranging measurement" should therefore be understood to include both measurements including some degree of ambiguity as well as absolute and/or unique distance measurements.

The processing may use knowledge of the first, second, and third times or one or more relative comparisons among them.

This may comprise using relative knowledge of the times - such as a difference between the first and second; second and third; and/or first and third times. It may be easier to determine a time difference accurately than it is to determine the corresponding absolute times.

Measuring a time-difference may comprise measuring an elapsed time between receiving respective sets of samples used to calculate the position fixes.

That is, a record may be kept of the difference between the time of arrival of the satellite signals which give rise to one set of samples and the time of arrival of the satellite signals which give rise to another set of samples. It may be possible to measure this difference more accurately than it would be to calculate the difference by subtracting respective time-stamps. For example, the difference may be measured by counting periods of an oscillator signal generated at the receiver, such as a high-quality, high-frequency oscillator signal, or by counting periods of the carrier in the satellite signal. This may be done by observing and counting the number of rising or/and falling edges of a periodic signal, in order to improve precision. Preferably this counting technique is applied to the oscillator signal produced by a frequency synthesizer which generates the high-frequency clock signal for the analogue-to-digital conversion and the subsequent digital processing. This allows the measurement of elapsed time to benefit from the granularity of a high-frequency oscillator.

Each of the first and second reference information preferably comprises at least one of: the respective position fix; a satellite-clock time associated with the position fix; a clock-error between the satellite-clock time and a receiver-clock time; a ranging measurement between the receiver and a satellite; and an observed Doppler shift of a signal received from a satellite

The assistance preferably comprises predicting, based on the reference information at the first and second times, corresponding information at the third time.

Thus, the assistance may comprise predicting or estimating expected values for one or more of: the third position fix; a satellite-clock time corresponding to the third time; a clock-error at the third time; a ranging measurement at the third time; and a Doppler shift of a satellite signal which may have been observable by the receiver at the third time.

Prediction based on two pieces of reference information may be more sophisticated (and therefore provide more useful results) than simpler forms of prediction, such as copying a single piece of reference information generated during the earlier calculation of a different position fix. Here, making a prediction "based on" two pieces of reference information implies that changing the value of either one of the two pieces of reference information can change the result of the prediction.

The prediction may comprise interpolating a third value, corresponding to the third time, based on first and second values, corresponding to the first and second times, respectively.

Interpolation occurs because the third time occurs between the first and second times. The first reference information comes from a time before the set of samples was generated; and the second reference information comes from a time after the set of samples was generated.

The interpolation may use a variety of suitable methods. For example, the interpolation may be linear or non-linear.

The prediction step may advantageously include predicting the third position using an estimate of speed and/or direction of travel.

The estimate of speed, direction, or velocity may be based on measurements (for example, of instantaneous or average speed or direction of travel). Alternatively, parameters such as the speed may be inferred based on knowledge of the application for which a GPS receiver is being used, or is intended to be used. Thus, a maximum speed may be estimated if the receiver device is designed for use in a particular pursuit, such as walking, running or cycling. The GPS receiver may have different modes for different activities, and the estimate of maximum speed may depend upon which of the modes is currently selected.

The processing may be further assisted by reference information produced during the calculation of one or more further position fixes, corresponding to other times.

The further position fixes are the calculated positions of the receiver at these other times.

For non-linear methods of interpolation, in particular, it may be useful or necessary to exploit reference information from more than two points in time. Non-linear methods may include (but are not limited to) quadratic, cubic, or higher order polynomial interpolation; and curve fitting.

The assistance may comprise choosing or deriving a parameter to be used in the processing.

In some cases, the chosen parameter may be the same as the predicted information (predicted from the first and second reference information). For example, the reference information may comprise a Doppler shift; the predicted information may be a Doppler shift; and the parameter used in the calculation may be a Doppler shift.

In other cases, the parameter may be derived from the predicted information in some way. For example, the reference information may be the position coordinates of each (first and second) position fix; the predicted information may be expected position coordinates for the third position fix; and the parameter used in the processing may be an expected code-phase to be used as a starting point when despreading the set of signal samples. In this example, an expected code-phase can be derived from the predicted position, based also on some knowledge of the third time and the movements of the corresponding satellite.

The parameter is preferably an initial estimate of a ranging measurement or carrier frequency to be used in a despreading calculation.

For example, information about an expected Doppler shift can be combined with a known satellite-transmission frequency, in order to predict the observed carrier frequency at the receiver. This can be used as the starting point in a correlation operation (search) which performs the despreading.

According to a further aspect of the invention, there is provided a method of processing signals from a satellite positioning system, comprising:

> receiving first, second, and third sets of data, each set comprising:

>> samples of satellite signals, obtainable by sampling satellite signals at a satellite positioning receiver, or ranging measurements derived from such samples,

> wherein the first, second, and third sets of data correspond to first, second and third time-instants;
> processing the first and second sets of data to derive respective first and second position fixes, in the course of which processing respective first and second reference information is produced; followed by

processing the third set of data according to the method of claim 1.

Also provided is a computer program comprising computer program code means adapted to perform all the steps of a method as described above if said program is run on a computer, and such a computer program embodied on a computer readable medium.

According to another aspect of the invention, there is provided a satellite positioning receiver according to claim 12.

The invention will now be described by way of example with reference to the accompanying drawings, in which:

Fig. 1 is a block diagram showing a GPS receiver according to an embodiment of the invention; and
Fig 2 is a flowchart illustrating a method according to an embodiment.

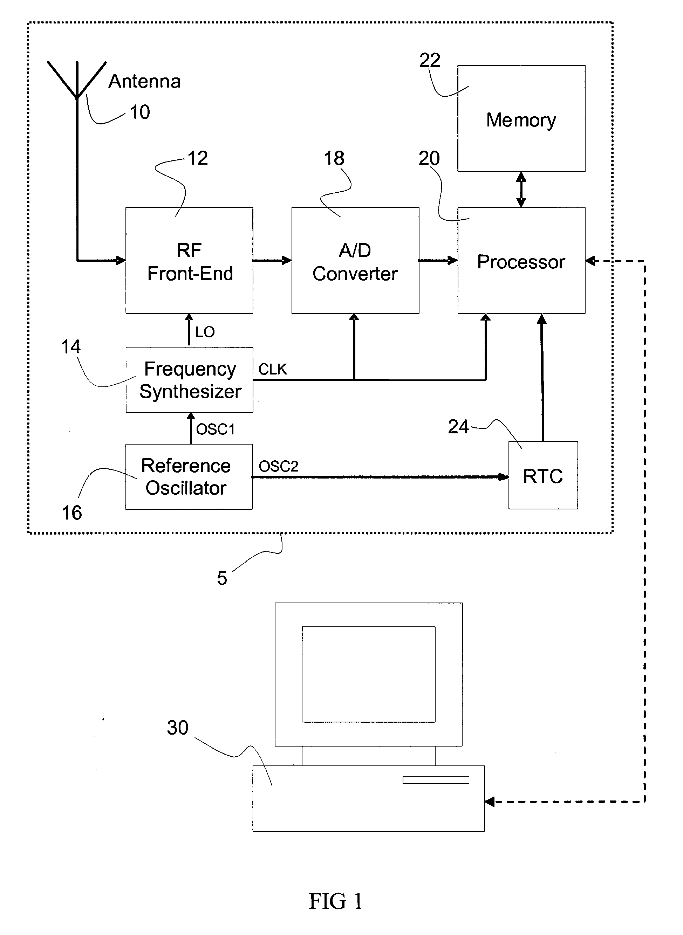

Fig. 1 shows a GPS receiver suitable for operating in accordance with embodiments of the invention. The GPS receiver 5 comprises an antenna 10 coupled to an RF front-end 12. The RF front-end 12 includes circuitry for amplifying GPS signals received via the antenna 10. It also includes filtering circuits for attenuating out-of-band interference; and a mixer. The mixer multiplies the received signals with a local oscillator (LO) signal that is produced by a frequency synthesizer 14, to generate signals at sum and difference frequencies. Frequency synthesizer 14 is driven by a high-frequency output OSC1 produced by a reference oscillator 16. In the present embodiment, the high-frequency output OSC1 of the reference oscillator 16 operates at a frequency of 26 MHz. After further appropriate filtering, the mixing operation in the RF front-end 12 yields an intermediate frequency (IF) signal that is input to analogue-to-digital converter 18. The signal samples generated by the A/D converter 18 are output to processor 20 for processing. Both A/D converter 18 and processor 20 are clocked by a high-speed clock output CLK generated by the frequency synthesizer 14. Note that the analogue circuits of the RF front-end 12 and the A/D converter 18 may be of conventional types, such as will be well known to the skilled person.

According to a first embodiment of the invention the processor 20 is adapted to process the signal samples received from the A/D converter 18 to generate a position fix immediately as the signals are received and sampled. This processing comprises deriving pseudo-ranges and calculating a position fix. This mode is therefore suitable for real-time navigation, since a live position fix is provided.

During the processing of each set of signal samples to calculate a position fix, the processor 20 generates reference information, which can be used to aid subsequent calculations. This reference information is stored in a memory 22, for later use. Examples of suitable reference information will be described in greater detail below.

When the processor 20 has calculated two position fixes, two corresponding pieces of reference information will be available in the memory 22. Later, when the processor wishes to calculate a third position fix, from a third set of satellite-signal samples, these two pieces of reference information are used.

According to a second embodiment of the invention, the processor is instead operable to store data in a memory 22 without completing the processing. In an exemplary second embodiment, the data stored in the memory 22 comprises the raw samples of IF signals provided by the A/D converter 18. However, in other embodiments it may alternatively comprise partially processed data, such as pseudo-ranges or other ranging measurements.

A Real-Time Clock (RTC) 24 is also provided to keep track of the current time and can be used to produce time-stamps which are associated with the data stored in the memory 22. This allows later determination of the approximate time with which the data is associated. In the presently described embodiments, the RTC 24 is driven by a second output OSC2 produced by the reference oscillator 16. However, since the RTC 24 runs at a slower rate than that required of the frequency synthesizer 14, a frequency divider is used within the reference oscillator 16 to provide the low-frequency output OSC2. In this way, the reference oscillator 16 acts as a master oscillator generating a master clock signal from a single quartz crystal, to which both the frequency synthesizer 14 and the RTC 24 are synchronised. In the present embodiment, the low-frequency output OSC2 of the reference oscillator 16 operates at a frequency of approximately 26 kHz, which implies a frequency divider ratio of around one thousand.

In addition, the processor 20 is operable to measure time differences between various events by counting periods of the high-speed clock output CLK produced by the frequency synthesizer 14. Because the frequency synthesizer signal CLK runs at a much higher-frequency than an internal timing-signal in the RTC, it is possible to measure these time-intervals between events more accurately in this way. For even finer granularity in measuring time intervals, the processor can count both the rising and falling edges of the high-speed clock-signal CLK.

Note that the processor 20 may be implemented as a bespoke hardware device, such as one or more application specific integrated circuits (ASICs). Alternatively, the processor 20 may comprise one or more general purpose processing units or digital signal processors (DSPs) which have been suitably programmed. Implementation of either alternative will be well within the capabilities of those skilled in the art.

The GPS receiver 5 is connectable to a personal computer 30 via a communications link. This link may be wired (for example, USB) or wireless (for example, Bluetooth or WLAN). In the second embodiment mentioned above, some or all of the processing of satellite signals may be performed at the personal computer. This will be explained in greater detail in the examples below.

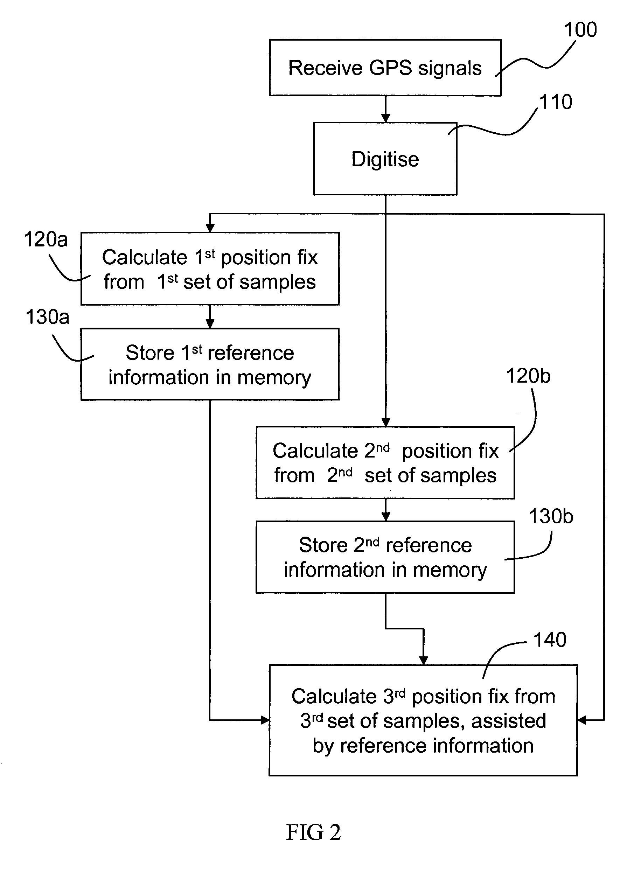

A method according to the first embodiment of the invention will now be described, with reference to Fig. 2.

In step 100, the GPS receiver 5 receives GPS signals. These signals are digitised 110 in real-time by the A/D converter 18 to generate GPS signal samples. The processor 20 processes 120a a first set of samples in real-time, to calculate a position fix. Reference information produced in this calculation is stored 130a in the memory 22. The process is repeated for a second set of the signal samples. These are processed in step 120b, to calculate a second position fix and second reference information produced is stored 130b in the memory. The two processing steps 120a, 120b and two storing steps 130a, 130b are substantially identical.

At some later time, the processor processes 140 a third set of the signal samples, in an attempt to calculate a third position fix. The processing 140 is different from the processing of steps 120a and 120b, because it uses the first and second reference information as input (in addition to the third set of digitised signal samples). The two items of reference information are used to assist the calculation of the third position fix.

This assistance can be performed in a variety of ways, examples of which will now be described. These examples relate to the first embodiment of the invention, mentioned above, in which the processing is performed entirely onboard the GPS receiver 5. However, it will be clear to those skilled in the art that similar principles can be applied when the processing is distributed between the GPS receiver 5 and an external device 30, or even performed entirely in the external device 30.

Example 1

In this example, the reference information produced during the calculation of the first and second position fixes comprises knowledge of the first and second positions themselves - that is, the coordinates of the first position, calculated in real-time. These positions can be used to estimate the third position. That is, the two pieces of reference information are used to predict corresponding information (the third position) at the third time.

The prediction may comprise interpolating the position coordinates. Since the third time is between the first and second times, linear interpolation can be used, based on the assumption that the route taken by the receiver between the first and second positions was reasonably direct (that is, not convoluted). To the extent that this assumption is satisfied, the position predicted will be useful.

When performing linear interpolation, the time-stamps stored in the memory 22 for the first and second times are used, together with knowledge of the time of capture of the third set of samples. However, in another, simpler embodiment, the two positions may simply be averaged, without reference to the associated times.

Having an initial estimate of position allows the likely visible SVs to be predicted. Consequently, in the despreading process, the searching can be made more efficient. For example, it can be assumed that the same set of SVs will be visible (that is, detectable in the second set of signal samples); thus, the correlation operation can prioritise the PRN (spreading) codes for these SVs.

Once the estimate (prediction) for the third position is available, satellite trajectory data (such as ephemeris) can be used to determine the satellites that would have been visible from at that position, at the time of capture of the third set of samples. Ephemeris data must have been available in order for the first and second position fixes to have been calculated, in steps 120a and 120b and the same data can be used to predict satellite visibility. Here, the identities of the satellites predicted to be visible at the third position represent parameters which are used to bootstrap the despreading operation, when the third set of signal samples is processed.

It is also possible to choose other parameters of the processing, based on the first and second position fixes. For example, to the extent that the times and positions are known accurately, it is possible to predict a code-phase that will be observed for any given visible satellite at that predicted position and time. This code-phase parameter can be used as the starting point for the correlation-search in the despreading operation.

Example 2

Another useful type of reference information is the clock error (the apparent discrepancy between time as measured by the receiver real-time clock 24 and GPS time, as determined by the synchronised satellite clocks). This is determined uniquely for each successfully calculated position fix, because the satellite-clock time is one of the outputs of the trilateration computation.

If only a single real-time fix were used for prediction, this error could have moved in any direction between the known reference and unknown current value. The longer the time difference between the (sole) reference position fix and the generation of the third set of samples, the greater the allowance that would have to be made (up to some upper limit - for example, the size of the Earth, for deviation in position).

Starting from a single reference point, the limit of clock error (for example) for the second set of samples can be expressed as:

$$ClkErrR +/- (MaxClkErrRate * (TC - TR))$$

where ClkErrR is the clock-error measured for the single reference at time TR, the capture (third set of samples) was recorded at time TC and MaxClkErrRate is the maximum rate of change of clock error - usually defined by the specification of the crystal oscillator part used in the reference oscillator 16 of the receiver and measured in parts per million.

When a calculated (reference) position fix is available at each side of the third set of samples, several refinements become possible, using interpolation:

1) The limits for the parameters in question are constrained by both of the reference measurements. Thus, for example, the maximum clock error is: the minimum of:

$$ClkErrR1 + (MaxClkErrRate * (TC - TR1)),$$

and

$$ClkErrR2 + (MaxClkErrRate * (TR2 - TC)).$$

The minimum clock error would be the maximum of:

$$ClkErrR1 - (MaxClkErrRate*(TC-TR1)),$$

and

$$ClkErrR2 - (MaxClkErrRate*(TR2-TC))$$

(assuming that TR1 comes before TC and TR2 is after).
2) The starting point for the correlation-search can be chosen based on a linear interpolation between ClkErrR1 and ClkErrR2 (in proportion to TR1, TC and TR2).
3) Where the two reference values of clock error are quite close together in time (as they commonly will be) the value of MaxClkErrRate might even be reduced, because the chance of a major excursion in clock error before returning to its earlier value is highly unlikely.

The effect of each of these refinements is to reduce the search range for code-phase during despreading (in many cases quite substantially), as well as providing a better starting value (that is, initial estimate). This is likely to improve success rates as well as reducing computational cost.

The interpolation may also include terms for measurement error - for example the measured clock errors ClkErrR1 and ClkErrR2, above, may be uncertain. The rate at which uncertainty grows may also be modelled in a more sophisticated (for example non-linear) manner. It may also be desirable to incorporate knowledge (from the reference fixes) of receiver velocity and clock drift (that is, the rate of change of clock error).

If ClkErrR1=ClkErrR2 and MaxClkErrRate is a constant, then the "minimum" criterion can be seen to become equivalent to selecting the closer of the two reference points, TR1 and TR2, and predicting the error from that single reference. However, this set of conditions is extremely unlikely, in practice, because it would imply that the crystal in the reference oscillator 16 at the receiver is perfectly synchronised with the rate of the satellite-clock, with just a constant offset existing.

As noted above, parameters for the correlation search can be chosen based on the predicted value of clock-error. In particular, the starting point for the search can be chosen based on the clock-error prediction and the search range can be chosen based on the minimum and maximum predicted clock errors. In order to choose the starting code-phase, the predicted value of clock error for the third time-instant is combined with the satellite-clock time derived for the first (or second) position fix, and the measured code-phase for that position fix. A similar approach can be used to choose the end-points of the search range, based on the minimum and maximum predicted clock errors. This simple approach assumes that the receiver has not moved significantly between the first (or respectively, second) position fix and the third time-instant. It also assumes that the distance from the receiver to the satellite in question has not changed considerably, due to the satellite's orbital motion. This will typically be true if the time interval between the sets of samples is reasonably short and the receiver is not fast-moving. Alternative approaches, which avoid these simplifying assumptions, will be described in a fourth example, below.

In this example, the starting code-phase can be seen to be predicted from a single reference (from one or other of the first and second position fix), by using a prediction based on the clock-errors of both position fixes. In the third example, below, it will be explained how the code-phase can be predicted using interpolation from two (or more) reference points.

Example 3

Another way to predict the ranging measurements, during despreading, is to use corresponding ranging measurements from the first and second position fixes as reference information. In this case, each of the first and second reference information comprises a ranging measurement (for example, code-phase) calculated for a given one of the GPS satellites. These two values are used to predict a corresponding code-phase value at the third time and position. This prediction may comprise interpolating from the two reference code-phases. In this case, the value predicted is of the same type as the parameter to be used in the position fix calculation: the predicted code-phase is used directly as the intial code-phase in the correlation search, so that no conversion between parameter-types is needed.

In a similar fashion, values such as Doppler shift (of an observed satellite carrier-frequency) can be predicted by interpolation from the measured Doppler shifts associated with first and second reference position fixes.

Example 4

The different types of information used in these different examples can advantageously be used in combination. For instance, the use of position (as in the first example) can beneficially be combined with the use of time (as in the second example) to provide better assistance. Based on the first and second positions, and the time intervals, a locus of possible positions of the device at the third time can be estimated. Knowledge of speed and direction of travel can be used to estimate the position at the time that the third set of samples was generated. Alternatively, if speed of travel cannot be measured, a maximum speed could be assumed based on knowledge of the application for which the GPS receiver is intended. For example, if the GPS receiver is designed as a bicycle accessory, then one set of assumptions can be made; if the GPS receiver is designed as an in-car navigation device (or is a Portable Navigation Device that is being powered by a cigarette lighter socket in a car) then a higher speed may be assumed. The better the approximate estimate of time and position, the greater the likely efficiency improvement when processing of the third set of samples. An algorithm such as the following can then be applied:

1) The predicted clock error and predicted range of clock errors are calculated as in Example 2, above.
2) An initial estimate of expected position is predicted (for example, by interpolation) from the known first and second positions, as in Example 1, above.
3) The bounds of the possible range for the third position can be predicted from the speed and direction of travel (to the extent known). Here, the prediction of the ranges of positions is analogous to the prediction of a range of clock errors in the second example above: knowing the starting point, and the maximum and minimum rates of change (speeds), the plausible range of spatial coordinates can be established in the same way as the plausible range of the temporal coordinate.
4) The predicted position and predicted time are then combined with the known motion of the SVs to predict the expected pseudo-range and thus code-phase of the signals. This gives the starting point for the search. Likewise, the predicted range of positions and the predicted range of clock errors can be combined with the SV motion data to produce appropriate (and hopefully narrow) search ranges about the starting point. Note that the motion of the SVs can be obtained from ephemeris data, but also by other means, such as almanac data with corrections/refinements applied, or "stale" ephemeris that has been extended beyond its usual range of validity by using celestial mechanical models.
5) The calculation of the third position fix then proceeds using these chosen parameters.

While the invention has been illustrated and described in detail in the drawings and foregoing description, such illustration and description are to be considered illustrative or exemplary and not restrictive; the invention is not limited to the disclosed embodiments.

Although the examples above have discussed interpolation from two reference points, it is of course possible to extend the same techniques to use a greater number of reference points. For example, those skilled in the art will appreciate that a variety of curve fitting algorithms can be used to predict unknown values of variables, based on arbitrary numbers of reference points.

As already mentioned above, methods according to embodiments of the invention can be applied to both real-time and off-line (Capture-and-Process) satellite positioning.

In one example, the first and last set of samples to be generated may be processed first, on the assumption that interpolation between these is likely to be a more reliable predictor.

In other examples, there may be an active or adaptive selection step, to choose the order. WO 2009/000842 describes a procedure for efficiently processing multiple sets of signal samples as a batch. Initial processing is used to identify the most promising set of samples (that which will be easiest to process successfully). Once this identified set of samples has been processed to calculate a position fix, the results can be used as a single reference to assist in the calculation of the other position fixes. The present invention can be combined with the method of WO 2009/000842. In an exemplary combined method, preliminary processing is performed on the three (or more) sets of samples, to select the most promising two sets. These two sets are fully processed first, to calculate position fixes. Then, the remaining set is processed, using assistance from the two earlier-calculated position fixes.

Notably, in some (Capture-and-Process) embodiments, instead of measuring and storing full pseudo-ranges, the receiver may store code-phases. This postpones the additional processing needed to establish the coarse timing (position in the data message). However, in this case, supplementary information will be needed when the code-phases are later processed, to allow the coarse timing ambiguity to be resolved. Typically, therefore, some other information will need to be stored along with the code-phases or obtained separately.

The coarse timing can be determined in a wide variety of ways, and so the type of data which should be stored to augment the code-phases can also vary widely. Ultimately, what is needed is an approximate estimate of the time-instant to which the code-phase measurement corresponds and some way to relate this estimate to the satellite clock. This then enables the position in the data message to be determined. Approximate times could be determined from an internal real-time clock of the receiver, provided the relationship between this real-time clock and the satellite clock can be established accurately enough to resolve the ambiguity. Thus, in one example, time-stamps generated by the internal real-time clock can be stored to supplement measured code-phases. The relationship with the satellite clock could be established by intermittently storing a block of signal samples that is long enough to extract satellite clock information (also with a local time-stamp). Alternative ways of determining the coarse timing will be apparent to those skilled in the art. For example, it would be possible to use a coarse estimate of position (at the time the code-phases were measured) to extrapolate the coarse timing (because the timing is uniquely related to the relative positions of the satellites with respect to the receiver at every time instant). A coarse position estimate might be available from some external source, or could, for example, be calculated from the observed Doppler shifts of the satellite constellation. In this way, storing the apparent (observed) satellite broadcast frequencies could also be a suitable supplement for stored code-phases.

WO 2006/018803 describes one efficient and effective way of storing time-stamps together with signal samples. This may be used in embodiments of the present invention in which the third set of samples (at least) is stored in the memory 20 for later processing. A small portion of the GPS signal samples can simply be over-written (replaced) in the memory by the time-stamp bits. This not only avoids the need for separate records of time-stamp but also ensures accurate synchronisation of the time-stamp against the received samples. The small, missing part of the captured set of samples does not usually degrade the subsequent processing steps.

The receiver 5 may be an assisted GPS (A-GPS) receiver, which can obtain almanac; ephemeris; or potentially full satellite data-message records from an assistance server. The server may gather this information from a fixed GPS receiver or a network of receivers dispersed around the world. Each of these reference receivers reports decoded satellite data messages to the central database. Alternatively, the aiding data could be gathered dynamically from a network of mobile GPS receivers. That is, each GPS receiver would share its own, fragmentary observations of satellite data messages with the central server. The server would aggregate these observations to form a complete record, which could then be accessed by all receivers. Communication with a data-aiding server can be by any convenient means, but will usually be via a wireless data connection of some kind.

Nominally stale satellite trajectory data may be enhanced by using more advanced techniques to extrapolate the orbits of the satellites. For example, models of the movement, interaction and gravitational influence of celestial bodies (like the earth, sun and moon) may be used generate better estimates of satellite trajectory. This can allow ephemeris and almanac information to be used far outside (either before or after) the normal period of validity.

Note that the embodiments above have been described with reference to a super-heterodyne receiver architecture, in which RF signals are down-mixed to an intermediate frequency. Of course, those skilled in the art will readily appreciate that identical principles apply to a direct conversion receiver. Indeed, such a receiver can simply be considered to have an intermediate frequency of zero.

Similarly, the embodiment of Fig. 1 shows a receiver in which both the real-time clock (RTC) 24 and the frequency synthesizer 14 derive their clock signals from the same source - that is, a single master reference oscillator 16, operating from a single crystal. Of course, the applicability of the invention is not limited to this architecture. In another embodiment, the RTC 24 may be driven by a separate, slower-running RTC oscillator using its own crystal, for instance a 32.768 kHz RTC crystal. Thus, the clock signal driving the RTC can be independent from that driving the frequency synthesizer 14.

As will be readily apparent, the present invention is not limited to the calculation of position estimates. Other parameters such as velocity may of course be calculated in addition. For example, it is well known to calculate velocity from the Doppler shifts of satellite positioning signals, once the position of a receiver is known.

In some embodiments, in addition to the conventional filtering in the RF front-end, further filtering of the received GPS signals may be performed after the signals have been sampled. For example, US 2008/0240315 describes methods and circuits for interference suppression. The filtering can be part of the RF front-end or part of the base-band processing. Digital filtering of this kind may be adaptive. That is, the sampled signals may be analysed to determine if interference is present and, if so, to measure the properties of the interference (for example, frequency or power). The digital filtering can then be adapted automatically to cancel or attenuate the interference optimally. It may be particularly beneficial to perform filtering at a higher sample rate (as output by the analogue-to-digital converter) and then to decimate the filtered signal samples to a lower rate before storing or processing them. Alternatively or in addition to decimation, the bit-width (that is, bit-resolution) of each sample may be reduced after such processing. If the samples are to be stored, this reduces both the volume of storage and the throughput demands on the memory interface. If the samples are to be processed immediately, decimation and/or bit-resolution reduction can reduce power consumption and/or complexity of the processing hardware. However, by filtering beforehand, the quality of the resulting reduced-resolution signals is likely to be greater.

Herein, references to "sampling" received signals and "storing" resultant signal samples should therefore be taken to include the possibility of additional filtering between the sampling step (analogue-to-digital conversion) and the step of storing the samples.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

The embodiments described above have concentrated on satellite positioning using GPS. However, those skilled in the art will appreciate that the scope of the invention is not limited to the use of GPS. The same principles are equally applicable to other satellite positioning systems. These are known generically as "Global Navigation Satellite Systems" (GNSS). Other examples of a GNSS include, but are not limited to, the Russian "Global Navigation Satellite System" (GLONASS) and the European project, "Galileo".

Although the present invention is concerned with satellite positioning systems, those skilled in the art will appreciate that the same or similar techniques can also be applied to positioning systems in which the reference beacons are not space vehicles. For example, positioning by means of "pseudolites" has been proposed as an alternative to satellite positioning. Pseudolites are typically terrestrial transmitters which broadcast a signal that is analogous (or identical) to the signals transmitted by GPS satellites. Thus a pseudolite may use the same L1 frequency used by the GPS satellites, and a similar spread-spectrum modulation scheme. To the extent that pseudolite signals can be processed in the same way as satellite positioning signals, the present specification should be taken as disclosing equivalent techniques for calculating a third position fix from pseudolite signals, assisted by reference information produced in the course of the calculation of first and second position fixes.

**Claims**

1. A method of calculating a position fix from satellite signal samples, the method comprising:

   obtaining first reference information produced during the calculation (120a) of a first position fix, the first position fix being the calculated position of a satellite-positioning receiver (5) at a first time;
   obtaining second reference information produced during the calculation (120b) of a second position fix, the second position fix being the calculated position of the receiver (5) at a second time;
   receiving a set of satellite signal samples generated by the receiver at a third time between the first and second times, or ranging measurements derived from such a set of satellite signal samples; and

processing (140) the set of samples or the ranging measurements to calculate a third position fix,
wherein said processing (140) is assisted by the reference information produced during the calculation of the first and second position fixes.

2.  The method of claim 1, wherein the processing uses knowledge of the first, second, and third times or one or more relative comparisons among them.

3.  The method of claim 1 or claim 2, wherein each of the first and second reference information comprises at least one of:

    the respective position fix;
    a satellite-clock time associated with the position fix;
    a clock-error between the satellite-clock time and a receiver-clock time;
    a ranging measurement between the receiver and a satellite; and
    an observed Doppler shift of a signal received from a satellite

4.  The method of any of claims 1 to 3, wherein the assistance comprises predicting, based on the reference information at the first and second times, corresponding information at the third time.

5.  The method of claim 4, wherein the first reference information comprises a first value, the second reference information comprises a second value, and the prediction comprises interpolating a third value, corresponding to the third time, based on the first and second values.

6.  The method of claim 4 or claim 5, wherein the prediction includes predicting the third position using an estimate of speed and/or direction of travel.

7.  The method of any of claims 1 to 6, wherein the processing is further assisted by reference information produced during the calculation of one or more further position fixes, corresponding to other times.

8.  The method of any preceding claim, wherein the assistance comprises choosing a parameter to be used in the processing.

9.  The method of claim 8, wherein the parameter is an initial estimate of a ranging measurement or Doppler shift to be used in a despreading calculation.

10. A method of processing signals from a satellite positioning system, comprising:

    receiving first, second, and third sets of data, each set comprising:

       samples of satellite signals, obtainable by sampling (110) satellite signals at a satellite positioning receiver (5), or
       ranging measurements derived from such samples,

    wherein the first, second, and third sets of data correspond to first, second and third time-instants;
    processing (120a, 120b) the first and second sets of data to derive respective first and second position fixes, in the course of which processing respective first and second reference information is produced (130a, 130b); followed by
    processing (140) the third set of data according to the method of any of claims 1 to 9.

11. A computer program comprising computer program code means adapted to perform all the steps of any of claims 1 to 10 when said program is run on a computer.

12. A satellite positioning receiver (5) comprising:

    an RF front end (12), for receiving (100) satellite positioning signals;
    an analogue-to-digital converter (18), for sampling (110) the received signals to generate signal samples;
    a memory (22); and
    a processor (20) adapted:

to process (120a) a first set of the samples, to calculate a first position fix, which is the calculated position of the satellite-positioning receiver at a first time;

to process (120b) a second set of the samples, to calculate a second position fix, which is the calculated position of the satellite-positioning receiver at a second time; and

to store (130a, 130b) in the memory (22) first and second reference information produced in the course of the respective calculations,

wherein the processor (20) is further adapted to process (140) a third set of the samples generated by the analogue-to-digital converter at a third time between the first and second times, or ranging measurements derived from the third set of samples, to calculate a third position fix, assisted by the first and second reference information.

13. The satellite positioning receiver of claim 12, wherein the receiver (5) is further adapted:

to store the third set of the samples, or ranging measurements derived from the third set of samples, in the memory (22); and

to retrieve the stored third set of samples or the stored ranging measurements from the memory (22),

before processing the third set of samples or ranging measurements derived from the third set of samples to calculate (140) the third position fix.

14. A system comprising a satellite positioning receiver (5) and an external device (30), the satellite positioning receiver comprising:

an RF front end (12), for receiving (100) satellite positioning signals;

an analogue-to-digital converter (18), for sampling (110) the received signals to generate signal samples;

a memory (22); and

a processor (20) adapted:

to process (120a) a first set of the samples, to calculate a first position fix, which is the calculated position of the satellite-positioning receiver at a first time;

to process (120b) a second set of the samples, to calculate a second position fix, which is the calculated position of the satellite-positioning receiver at a second time; and

to store (130a, 130b) in the memory (22) first and second reference information produced in the course of the respective calculations,

wherein the receiver (5) is further adapted:

to store a third set of the samples generated by the analogue-to-digital converter at a third time between the first and second times, or ranging measurements derived from the third set of samples, in the memory (22); and

to upload the first and second reference information and the third set of samples or the ranging measurements stored in the memory (22) to an external device (30),

and wherein the external device is adapted to process the third set of samples or the ranging measurements to calculate (140) a third position fix, assisted by the first and second reference information.

**Patentansprüche**

1. Verfahren zum Berechnen einer Positionsbestimmung aus Satellitensignal-Samples, wobei das Verfahren umfasst:

Abrufen von ersten Bezugsinformationen, die während der Berechnung (120a) einer ersten Positionsbestimmung erzeugt worden sind, wobei die erste Positionsbestimmung eine zu einer ersten Zeit errechnete Position eines Satellitenpositionierungsempfängers (5) ist;

Abrufen von zweiten Bezugsinformationen, die während der Berechnung (120a) einer zweiten Positionsbestimmung erzeugt worden sind, wobei die zweite Positionsbestimmung eine zu einer zweiten Zeit errechnete Position des Empfängers (5) ist;

Empfangen eines Satzes von Satellitensignal-Samples, die vom Empfänger zu einer dritten Zeit erzeugt werden, oder von Entfernungsmaßen, die aus einem solchen Satz von Satellitensignal-Samples abgeleitet werden; und

Verarbeiten (140) des Satzes von Abtastwerten oder der Entfernungsmaße, um eine dritte Positionsbestimmung zu berechnen,

wobei die Verarbeitung (140) durch die Bezugsinformationen unterstützt wird, die während der Berechnung der ersten und zweiten Positionsbestimmungen erzeugt worden sind.

2. Verfahren nach Anspruch 1, wobei die Verarbeitung die Kenntisse über die ersten, zweiten und dritten Zeiten oder einen oder mehrere relative Vergleiche zwischen ihnen nutzt.

3. Verfahren nach Anspruch 1 oder Anspruch 2, wobei die ersten und zweiten Bezugsinformationen jeweils mindestens eine der folgenden umfassen:

die entsprechende Positionsbestimmung;
eine Satellitenuhrzeit, die mit der Positionsbestimmung assoziiert ist;
einen Taktfehler zwischen der Satellitenuhrzeit und einer Empfänger-Uhrzeit;
ein Entfernungsmaß zwischen dem Empfänger und einem Satelliten; und
eine beobachtete Doppler-Verschiebung eines Signals, das von einem Satelliten empfangen wird.

4. Verfahren nach einem der Ansprüche 1 bis 3, wobei die Unterstützung die Voraussage entsprechender Informationen zur dritten Zeit auf Basis der Bezugsinformationen zur ersten und zur zweiten Zeit umfasst.

5. Verfahren nach Anspruch 4, wobei die Vorausage die Interpolation oder Extrapolation eines dritten Wertes, welcher der dritten Zeit entspricht, auf Basis von ersten und zweiten Werten umfasst, welche den ersten bzw. zweiten Zeiten entsprechen.

6. Verfahren nach Anspruch 4 oder Anspruch 5, wobei die Voraussage die Voraussage der dritten Position unter Verwendung einer Vorausberechnung einer Geschwindigkeit und/oder Reiserichtung beinhaltet.

7. Verfahren nach einem der Ansprüche 1 bis 6, wobei die Verarbeitung ferner durch Bezugsinformationen unterstützt wird, die während der Berechnung einer oder mehrerer Positionsbestimmungen erzeugt werden, die anderen Zeiten entsprechen.

8. Verfahren nach einem der vorangehenden Ansprüche, wobei die Unterstützung das Wählen eines Parameters umfasst, der in der Verarbeitung verwendet werden soll.

9. Verfahren nach Anspruch 8, wobei der Parameter eine Anfangsvorausberechnung eines Entfernungsmaßes oder eine Trägerfrequenz ist, die in einer Entspreizungsberechnung verwendet werden soll.

10. Verfahren zum Verarbeiten von Signalen von einem Satellitenpositionierungssystem, umfassend:

Empfangen von ersten, zweiten und dritten Datensätzen, wobei jeder Satz umfasst:

Samples von Satellitensignalen, die durch Sampeln (110) von Satellitensignalen an einem Satellitenpositionierungsempfänger (5) erhalten werden können, oder
Entfernungsmaße, die von solchen Samples abgeleitet werden,

wobei die ersten, zweiten und dritten Datensätze ersten, zweiten und dritten Zeitpunkten entsprechen;
Verarbeiten (120a, 120b) der ersten und zweiten Datensätze, um entsprechende erste und zweite Positionsbestimmungen abzuleiten, wobei im Verlauf dieser Verarbeitung entsprechende erste und zweite Bezugsinformationen erzeugt werden (130a, 130b), gefolgt von
Verarbeiten (140) des dritten Datensatzes gemäß dem Verfahren nach einem der Ansprüche 1 bis 9.

11. Computerprogramm, Computerprogrammcode-Einrichtungen umfassend, die dafür ausgelegt sind, sämtliche Schritte nach einem der Ansprüche 1 bis 10 auszuführen, wenn das Programm auf einem Computer ausgeführt wird.

12. Satellitenpositionierungsempfänger (5), umfassend:

eine HF-Stufe (12) zum Empfangen (100) von Satellitenpositionierungssignalen;
einen Analog-zu-Digital-Wandler (18) zum Sampeln (110) der empfangenen Signale, um Signal-Samples zu erzeugen;
einen Speicher (22); und
einen Prozessor (20), der dafür ausgelegt ist:

einen ersten Satz der Samples zu verarbeiten (120a), um eine erste Positionsbestimmung zu berechnen, bei der es sich um die errechnete Position des Satellitenpositionierungsempfängers zu einer ersten Zeit handelt; und;
einen zweiten Satz der Samples zu verarbeiten (120b), um eine zweite Positionsbestimmung zu berechnen, bei der es sich um die errechnete Position des Satellitenpositionierungsempfängers zu einer zweiten Zeit handelt;
erste und zweite Bezugsinformationen, die im Laufe der entsprechenden Berechnungen erzeugt werden, im Speicher (22) zu speichern (130a, 130b),

wobei der Prozessor (20) ferner dafür ausgelegt ist, einen dritten Satz der Samples oder Entfernungsmaße, die aus dem dritten Satz von Samples abgeleitet sind, zu verarbeiten, um, unterstützt von den ersten und zweiten Bezugsinformationen, eine dritten Positionsbestimmung zu berechnen.

13. Satellitenpositionierungsempfänger nach Anspruch 12, wobei der Empfänger (5) ferner ausgelegt ist, um:

den dritten Satz der Samples oder Entfernungsmaße, die aus dem dritten Satz der Samples abgeleitet sind, im Speicher (22) zu speichern; und
den gespeicherten dritten Satz von Samples oder Entfernungsmaße, die aus dem dritten Satz von Samples abgeleitet sind, aus dem Speicher (22) abzurufen,
bevor er den dritten Satz von Samples oder Entfernungsmaße, die aus dem dritten Satz von Samples abgeleitet sind, verarbeitet, um die dritte Positionsbestimmung zu berechnen (140).

14. System, einen Satellitenpositionierungsempfänger (5) und eine externe Vorrichtung (30) umfassend, wobei der Satellitenpositionierungsempfänger umfasst:

eine HF-Stufe (12) zum Empfangen (100) von Satellitenpositionierungssignalen;
einen Analog-zu-Digital-Wandler (18) zum Sampeln (110) der empfangenen Signale, um Signal-Samples zu erzeugen;
einen Speicher (22); und
einen Prozessor (20), der dafür ausgelegt ist:

einen ersten Satz der Samples zu verarbeiten (120a), um eine erste Positionsbestimmung zu berechnen, bei der es sich um die berechnete Position des Satellitenpositionierungsempfängers zu einer ersten Zeit handelt;
einen zweiten Satz von Samples zu verarbeiten (120b), um eine zweite Positionsbestimmung zu berechnen, bei der es sich um die berechnete Position des Satellitenpositionierungsempfängers zu einer zweiten Zeit handelt; und
erste und zweite Bezugsinformationen, die im Laufe der entsprechenden Berechnungen erzeugt werden, im Speicher (22) zu speichern (130a, 130b), wobei der Empfänger (5) ferner dafür ausgelegt ist:

einen dritten Satz der Samples, die vom Analog-zu-Digital-Wandler zu einer dritten Zeit zwischen der ersten und der zweiten Zeit erzeugt werden, oder Entfernungsmaße, die von dem dritten Satz von Samples abgeleitet werden, im Speicher (22) zu speichern; und

die ersten und zweiten Bezugsinformationen und den dritten Satz von Samples oder die Entfernungsmaße, die im Speicher (22) gespeichert sind, in eine externe Vorrichtung hochzuladen,
und wobei die externe Vorrichtung dafür ausgelegt ist, den dritten Satz von Samples oder die Entfernungsmaße zu verarbeiten, um, unterstützt von den ersten und zweiten Bezugsinformationen, die dritte Positionsbestimmung zu berechnen (140).

## Revendications

1. Un procédé de calcul d'un relevé de position à partir d'échantillons de signaux de satellite, le procédé comprenant :

l'obtention de premières informations de référence produites au cours du calcul (120a) d'un premier relevé de position, le premier relevé de position étant la position calculée d'un récepteur de positionnement par satellite (5) à un premier instant,

l'obtention de deuxièmes informations de référence produites au cours du calcul (120b) d'un deuxième relevé de position, le deuxième relevé de position étant la position calculée du récepteur (5) à un deuxième instant, la réception d'un ensemble d'échantillons de signaux de satellite généré par le récepteur à un troisième instant entre les premier et deuxième instants, ou des mesures télémétriques dérivées d'un tel ensemble d'échantillons de signaux de satellite, et

le traitement (140) de l'ensemble d'échantillons ou des mesures télémétriques de façon à calculer un troisième relevé de position,

où ledit traitement (140) est aidé par les informations de référence produites au cours du calcul des premier et deuxième relevés de position.

2.  Le procédé selon la Revendication 1, où le traitement utilise des connaissances des premier, deuxième et troisième instants ou une ou plusieurs comparaisons relatives entre elles.

3.  Le procédé selon la Revendication 1 ou 2, où les premières et deuxièmes informations de référence comprenant chacune au moins une information parmi :

le relevé de position respectif,
une heure d'horloge de satellite associée au relevé de position,
une erreur d'horloge entre l'heure d'horloge de satellite et une heure d'horloge de récepteur,
une mesure télémétrique entre le récepteur et un satellite, et
un décalage Doppler observé d'un signal reçu d'un satellite.

4.  Le procédé selon l'une quelconque des Revendications 1 à 3, où l'aide comprend la prédiction, en fonction des informations de référence au premier et deuxième instants, d'informations correspondantes au troisième instant.

5.  Le procédé selon la Revendication 4, où les premières informations de référence comprennent une première valeur, les deuxièmes informations de référence comprennent une deuxième valeur, et la prédiction comprend l'interpolation d'une troisième valeur, correspondant au troisième instant, en fonction des première et deuxième valeurs.

6.  Le procédé selon la Revendication 4 ou 5, où la prédiction comprend la prédiction de la troisième position au moyen d'une estimation de vitesse et/ou de direction de parcours.

7.  Le procédé selon l'une quelconque des Revendications 1 à 6, où le traitement est en outre aidé par des informations de référence produites au cours du calcul d'un ou de plusieurs autres relevés de position correspondant à d'autres instants.

8.  Le procédé selon l'une quelconque des Revendications précédentes, où l'aide comprend le choix d'un paramètre à utiliser dans le traitement.

9.  Le procédé selon la Revendication 8, où le paramètre est une estimation initiale d'une mesure télémétrique ou d'un décalage Doppler à utiliser dans un calcul de désétalement.

10. Un procédé de traitement de signaux provenant d'un système de positionnement par satellite, comprenant :

la réception d'un premier, d'un deuxième et d'un troisième ensembles de données, chaque ensemble comprenant :

des échantillons de signaux de satellite, pouvant être obtenus par l'échantillonnage (110) de signaux de satellite au niveau d'un récepteur de positionnement par satellite (5), ou
des mesures télémétriques dérivées de tels échantillons,

où les premier, deuxième et troisième ensembles de données correspondent à des premier, deuxième et troisième instants,
le traitement (120a, 120b) des premier et deuxième ensembles de données de façon à dériver des premier et deuxième relevés de position, au cours de ladite opération de traitement des premières et deuxièmes informations de référence étant produites (130a, 130b), suivie par le traitement (140) du troisième ensemble de données selon le procédé de l'une quelconque des Revendications 1 à 9.

11. Un programme informatique contenant un moyen de code de programme informatique adapté de façon à exécuter toutes les opérations selon l'une quelconque des Revendications 1 à 10 lorsque ledit programme est exécuté sur un ordinateur.

12. Un récepteur de positionnement par satellite (5) comprenant :

une extrémité avant RF (12) destinée à la réception (100) de signaux de positionnement par satellite, un convertisseur analogique à numérique (18) destiné à l'échantillonnage (110) des signaux reçus de façon à générer des échantillons de signaux, une mémoire (22), et un processeur (20) adapté de façon à :

traiter (120a) un premier ensemble des échantillons de façon à calculer un premier relevé de position, qui est la position calculée du récepteur de positionneur par satellite à un premier instant, et traiter (120b) un deuxième ensemble des échantillons de façon à calculer un deuxième relevé de position, qui est la position calculée du récepteur de positionneur par satellite à un deuxième instant, et conserver (130a, 130b) dans la mémoire (22) des premières et des deuxièmes informations de référence produites au cours des calculs respectifs,

où le processeur (20) est adapté en outre de façon à traiter (140) un troisième ensemble des échantillons générés par le convertisseur analogique à numérique à un troisième instant entre les premier et deuxième instants, ou des mesures télémétriques dérivées du troisième ensemble d'échantillons, de façon à calculer un troisième relevé de position, aidé par les premières et deuxièmes informations de référence.

13. Le récepteur de positionnement par satellite selon la Revendication 12, où le récepteur (5) est adapté en outre de façon à :

conserver le troisième ensemble des échantillons, ou des mesures télémétriques dérivées du troisième ensemble d'échantillons, dans la mémoire (22), et récupérer le troisième ensemble d'échantillons conservé en mémoire ou les mesures télémétriques conservées en mémoire à partir de la mémoire (22), et avant le traitement du troisième ensemble d'échantillons ou des mesures télémétriques dérivées du troisième ensemble d'échantillons, calculer (140) le troisième relevé de position.

14. Un système comprenant un récepteur de positionnement par satellite (5) et un dispositif externe (30), le récepteur de positionnement par satellite comprenant :

une extrémité avant RF (12) destinée à la réception (100) de signaux de positionnement par satellite, un convertisseur analogique à numérique (18) destiné à l'échantillonnage (110) des signaux reçus de façon à générer des échantillons de signaux, une mémoire (22), et un processeur (20) adapté de façon à :

traiter (120a) un premier ensemble des échantillons de façon à calculer un premier relevé de position, qui est la position calculée du récepteur de positionneur par satellite à un premier instant, et traiter (120b) un deuxième ensemble des échantillons de façon à calculer un deuxième relevé de position, qui est la position calculée du récepteur de positionneur par satellite à un deuxième instant, et conserver (130a, 130b) dans la mémoire (22) des premières et deuxièmes informations de référence produites au cours des calculs respectifs,

où le récepteur (5) est adapté en outre de façon à :

conserver un troisième ensemble des échantillons générés par le convertisseur analogique à numérique à un troisième instant entre les premier et deuxième instants, ou des mesures télémétriques dérivées du troisième ensemble d'échantillons, dans la mémoire (22),

télécharger les première et deuxième informations de référence et le troisième ensemble d'échantillons ou les mesures télémétriques conservées dans la mémoire (22) vers un dispositif externe(30),

et où le dispositif externe est adapté de façon à traiter le troisième ensemble d'échantillons ou les mesures télémétriques de façon à calculer (140) un troisième relevé de position, aidé par les première et deuxième informations de référence.

FIG 1

Receive GPS signals — 100

Digitise — 110

120a — Calculate 1st position fix from 1st set of samples

130a — Store 1st reference information in memory

Calculate 2nd position fix from 2nd set of samples — 120b

Store 2nd reference information in memory — 130b

140 — Calculate 3rd position fix from 3rd set of samples, assisted by reference information

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1260830 A
- GB 2463481 A
- WO 2009000842 A
- WO 2006018803 A
- US 20080240315 A